(19) Europäisches Patentamt
European Patent Office
Office européen des brevets

(11) Veröffentlichungsnummer: **0 003 121**
**B1**

# (12) EUROPÄISCHE PATENTSCHRIFT

(45) Veröffentlichungstag der Patentschrift: **22.09.82**

(51) Int. Cl.$^3$: **C 08 K 5/00**, C 08 L 67/00, D 01 F 1/00

(21) Anmeldenummer: **79100047.4**

(22) Anmeldetag: **09.01.79**

## (54) Verwendung von wasserunlöslichen Disazomethinverbindungen zum Färben von thermoplastischen Polyestern in der Masse, insbesondere in der Spinnfärbung.

(30) Priorität: **13.01.78 DE 2801288**

(43) Veröffentlichungstag der Anmeldung:
**25.07.79 Patentblatt 79/15**

(45) Bekanntmachung des Hinweises auf die Patenterteilung:
**22.09.82 Patentblatt 82/38**

(84) Benannte Vertragsstaaten:
**BE CH DE FR GB IT NL**

(56) Entgegenhaltungen:
**DE - A - 2 460 490**
**DE - A - 2 515 523**
**DE - A - 2 533 947**
**DE - C - 847 491**
**FR - A - 2 189 473**
**US - A - 3 441 578**
**US - A - 4 038 241**

(73) Patentinhaber: **HOECHST AKTIENGESELLSCHAFT**
**Postfach 80 03 20**
**D-6230 Frankfurt/Main 80 (DE)**

(72) Erfinder: **Papenfuhs, Theodor, Dr.**
**Heinrich-Bleicher-Strasse 40**
**D-6000 Frankfurt/Main 50 (DE)**
Erfinder: **Teige, Wolfgang**
**Unter den Nussbäumen 25**
**D-6233 Kelkheim (Taunus) (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Courier Press, Leamington Spa, England.

# Verwendung von wasserunlöslichen Disazomethinverbindungen zum Färben von thermoplastischen Polyestern in der Masse, insbesondere in der Spinnfärbung

Massefärbungen mit Pigmenten sind beispielsweise in Review of Progress in Coloration, Vol. 5 (1974), Seiten 86—94, beschrieben. Daraus ist bekannt, geformte Gebilde, wie z.B. Fasern aus synthetischen Polymeren, während der Synthese durch Zugabe entsprechend zubereiteter Pigmente einzufärben. So werden seit Jahren beispielsweise Fasern und Fäden aus Polyestern nach dem sogenannten Kondensationsverfahren spinngefärbt, bei dem man eine Pigment/Äthylenglykol-Dispersion vor oder nach der Umesterung des Ausgangsmaterials Dimethylterephthalat durch Äthylenglykol zum Diglykolterephthalat unter Abdestillieren des Methanols dem Umesterungsgemisch zugibt oder diese Dispersion vor oder während der Polykondensationsreaktion der Ausgangsprodukte für das Polyestermaterial der Reaktionsmasse zugibt und anschließend das so gefärbte Polymere in der Schmelze verspinnt. Dieses Verfahren hat jedoch Nachteile durch die erforderliche Dispergierung des verwendeten Pigments zu ausreichend kleinen Teilchen von etwa 2 $\mu m$ sowie wegen der durch das gefärbte Material verursachten Verunreinigungen in der Kondensationsanlage, die eine vorherige Reinigung bei der nachfolgenden Verwendung eines anderen Pigmentes erforderlich machen, so daß dieses Verfahren sehr aufwendig und teuer ist. Es wird deshalb nur zum Spinnfärben von Standardfarben, wie z.B. Schwarz, Grau, Marineblau und Braun, eingesetzt.

Ferner verwendet man in der Praxis Pigmentkonzentrate (Präparationen) für die Spinnfärbung von synthetischen Polymeren, wie Polyestern und Polyamiden, Die Polyäthylenwachse, Polyester und Polyamide als Trägermaterial enthalten.

Der Vorteil der letzterwännten Abeitsweise liegt darin, daß während des Verspinnens des Polymerisats ein rascher Wechsel der farbgebenden Komponente ohne eine zwischenzeitliche Reinigung der gesamten Anlage möglich ist, da nur der Spinnteil selbst mit dem Pigment in Berührung kommt. Nachteilig ist in den bekannten Verfahren jedoch, daß die Pigmentverteilung in den hierfür verwendeten Präparaten, die kurz vor der Spinndrüse in die zu verspinnende Polymermasse eingeführt werden, meist ungenügend ist, so daß die Filter- und Spinndüsen sehr bald verstopfen; weiterhin kann eine verminderte Faserfestigkeit des gefärbten Polymers auftreten. Es ist deshalb erforderlich, um die beim Spinnfärben von thermoplastischen Polymeren durch Pigmentagglomerate verursachten Schwierigkeiten zu vermeiden, mit Farbkörpern zu arbeiten, die im Spinnpolymer im geschmolzenen unt erstarrten Zustand eine ausreichende Löslichkeit besitzen. Derartige Farbkörper finden sich z.B. in der Reihe der Küpenfarbstoffe und der Dispersionsfarbstoffe, beispielsweise aus der Anthrachinonreihe. Ihre Eignung muß anhand von Spinnversuchen ermittelt werden, wobei sie insbesondere auf ausreichende Thermostabilität (beispielsweise bei Polyestern Prüfung auf Bestandigkeit bei 285°C während 20 Minuten), auf ihre Löslichkeit im Polymeren (größer als 2 Gew.-%), auf ihre coloristischen Eigenschaften, und die mit ihnen spinngefärbten Materialien selbst auf deren textilen Echtheitseigenschaften (beispielsweise auf Thermofixierechtheit bei 210°C während 60 Sekunden) ausgeprüft werden.

Weiterhin sind aus den deutschen Offenlegungsschriften 2515 253 und 25 33 947 Nickelkomplex-Disazomethinverbindungen bekannt, die teilweise den Verbindungen der nachfolgend definierten allgemeinen Formel (1) entsprechen. Gemäß der Lehre dieser beiden deutschen Offenlegungsschriften können diese Nickelkomplex-Disazomethinverbindungen als Pigmente, nach einer bei Pigmentfarbstoffen üblichen Konditionierung, zum Färben von Kunststoffmassen, zum Pigmentieren von Polyäthen, Polystyrol und Polyvinylchlorid und zum Spinnfärben von Viskose und Celluloseacetat eingesetzt werden. Aus diesen Druckschriften läßt sich aber nicht entnehmen, daß diese Nickelkomplex-Disazomethinverbindungen auch als Farbstoffe (d.h. als im Substrat molekulardisperslösliche Farbmittel) geeignet sind und deshalb im molekulardispers gelösten Zustand sogar vorteilhafter, d.h. zur Vermeidung der oben beschriebenen Nachteile, in die Massefärbung, insbesondere Spinnfärbung, von Polyestern eingesetzt werden können. Bei der Spinnfärbung von beispielsweise Viskose bleiben diese Nickelkomplex-Disazomethinverbindungen jedenfalls ungelöst, so daß die mit diesen Nickelkomplex-Disazoverbindungen ausgesponnenen Viskosefäden bzw. die hierfür eingesetzte Spinnmasse ungelöste Farbpartikel enthält.

Mit der vorliegenden Erfindung wurde nunmehr gefunden, daß mit der Verwendung von bestimmten, in der deutschen Offenlegungsschrift 25 15 523 beschriebenen Pigmenten als Farbmittel bei der Färbung von Polystern in der Masse, insbesondere in der Spinnfärbung, diese Nachteile vermieden werden da sich diese Farbmittel in Polyester überraschenderweise rückstandsfrei lösen und es somit gestatten, transparente, klare Färbungen von Polyestern in der Masse und insbesondere transparent schmelzspinngefärbte Polyesterfäden herzustellen.

Die vorliegende Erfindung betrifft somit die Verwendung von Verbindungen der allgemeinen Formel (1)

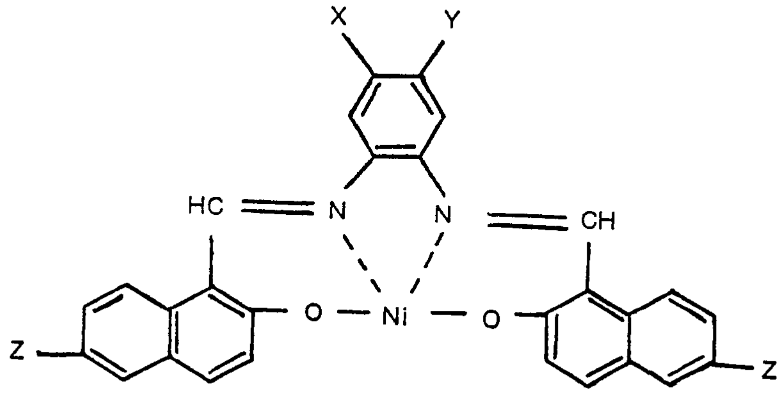

zum Färben von wasserunlöslichen thermoplastischen Polyestern, insbesondere linearen Polyestern, in der Masse. Unter Massefärbung wird auch die Spinnfärbung verstanden.

In der Formel (1) haben die einzelnen Formelglieder folgende Bedeutung:

X und Y stehen jedes für ein Wasserstoffatom, eine Alkylgruppe von 1—4 C-Atomen, wie die Methyl- oder Äthylgruppe, eine Alkoxygruppe von 1—4 C-Atomen, wie die Methoxy- und Äthoxygruppe, eine Carbonsäuregruppe oder eine Carbonsäurealkylestergruppe mit 1—4 C-Atomen im Alkylrest und

Z bedeutet ein Wasserstoffatom, eine Carbonsäuregruppe oder eine Carbonsäurealkylestergruppe von 1—4 C-Atomen im Alkylrest, wobei X, Y und Z gleich oder verschieden sind, jedoch eines von X oder Y oder beide nicht Wasserstoff sind, falls Z Wasserstoff bedeutet und wobei beide Z gleiche Bedeutung haben.

Bei der Massefärbung kann man analog bekannten und in der Technik üblichen Verfahrensweisen das Farbmittel dem Polymer zugeben und es darin in der Schmelze lösen oder das Farbmittel vor oder während der Polymerisationsreaktion zur Herstellung des wasserunlöslichen thermoplastischen Polymeren der Reaktionsmasse zusetzen und darin lösen.

Die vorliegende Erfindung betrifft insbesondere die Verwendung der Verbindungen der Formel (1) in der Spinnfärbung von Polyesterfasermaterialien.

Des weiteren betrifft die vorliegende Erfindung in der Masse gefärbte wasserunlösliche thermoplastische Polyester, die also Farbmittel eine Verbindung der Formel (1) gelöst enthalten.

Insbesondere eignen sich erfindungsgemäß diejenigen Verbindungen der Formel (1), in welcher X die Methoxy-, Äthoxy-, Carbonsäure- oder eine Carbonsäurealkylestergruppe mit 1—4 C-Atomen im Alkylrest bedeutet und Y und Z für ein Wasserstoffatom steht.

Die Verbindungen der Formel (1) können nach den in den deutschen Offenlegungsschriften Nrs. 2 460 490, 2 515 523 und 2 533 947 beschriebenen Verfahrensweisen hergestellt werden.

Polyesterpolymere, die in erfindungsgemäßer Weise in der Masse gefärbt werden können, sind beispielsweise lineare Polymere aus aromatischen Dicarbonsäuren, wie bspw. von Therephthalsäure, mit aliphatischen Dihydroxyverbindungen, wie Äthylenglykol, 1,4-Dihydroxybutan, 1,4-Dimethylolcyclohexan, somit bspw. Poly-butylenterephthalat, Poly-(1,4-dimethylol-cyclohexan-terephthalat), insbesondere aber Polyäthylenglykolterephthalat, ebenso aber auch das Poly-$\varepsilon$-caprolacton.

Die Massefärbung wird in bekannter Weise durchgeführt. So kann man bei der vorliegenden Erfindung zur Herstellung heller Farbtöne davon ausgehen, daß man das ungefärbte Polymere in Form eines Granulats oder in Form von Chips zuerst mit einer Verbindung der Formel (1) vermischt (sogenanntes "Panierverfahren") und diese Mischung dann erhitzt und aufschmilzt und die Verbindung der Formel (1) in dem Polyester löst. Dieses allgemein bekannte Panierverfahren läßt sich aber, wie üblich, nur zur Herstellung hellgefärbter Massen einsetzen, da die geringe Oberfläche des verwendeten Granulats bzw. der Chips keine höheren Konzentrationen an Farbmittel zuläßt, anderenfalls es zur Entmischung und zum Stauben bei der Handhabung des panierten Granulats kommt. — Nicht nur helle, sondern auch sehr tiefe Färbungen des Polymers in der Masse lassen sich erreichen, wenn man das Farbmittel, d.h. die Verbindung der Formel (1), in Form eines grieß- oder granulatförmigen Konzentrats (Präparats) dem zu färbenden Polyester, beispielsweise dem Granulat oder der Schmelze des Polymeren zugibt. Diese Farbmittelkonzentrate, sog. Master-Batches, bestehen aus der Verbindung der Formel (1) und einem geeigneten Trägermaterial: der Gehalt der Verbindung der Formel (1) in diesem Trägermaterial kann bis zu über 50 Gew.-% betragen. Geeignete, als synthetische Umhüllungspolymere für die Verbindung der Formel (1) dienende thermoplastische Trägermaterialien sind in bekannter Weise Polyalkylenglykole; insbesondere verwendet man für die Einfärbung thermoplastischer Polyester in der Masse als Umhüllungspolymer für die Verbindung der Formel (1) aliphatische Polyester mit einem Schmelzpunkt im Bereich von etwa 60 bis 120°C, so beispielsweise aliphatische Polyester vom Typ der Poly-$\varepsilon$-caprolactone mit einem Molekulargewicht zwischen 1000 und 50 000, des weiteren lineare aliphatische Ester von linearen aliphatischen Dicarbonsäuren mit 6 bis 12 C-Atomen und einem aliphatischen und/oder

cycloaliphatischen Glykol mit 2 bis 6 C-Atomen, so beispielsweise Poly-(äthylenglykoladipat) und Poly-(äthylenglykolsebacat), Poly-(äthylenglykol-decandicarboxylat) und Poly-(cyclohexandiol-adipat) mit einem Molekulargewicht zwischen 2000 und 15 000. Solche Umhüllungspolymere bzw. deren Herstellung sind in der Literatur beschrieben. Die Herstellung solcher Farbstoffkonzentrate aus einem Trägermaterial (Umhüllungspolymer) mit der Verbindung der Formel (1) kann in analoger Weise, wie aus der Literatur bekannt, beispielswiese mit Hilfe eines Kneters erfolgen, in welchem man die Verbindung der Formel (1) bei einer Temperatur, die dem aufgeschmolzenen Trägermaterial eine ausreichend hohe Viskosität verleiht mit dem Trägermaterial umhüllt bzw. bei Anwendung geringer Konzentrationen an der Verbindung der Formel (1) diese darin löst. Diese Master-Batches stauben nicht und lassen sich leicht zur Einfärbung der Polyester in den gewünschten Farbtönen einsetzen.

Des weiteren ist es erfindungsgemäß möglich, thermoplastische Polyester schon während deren Herstellung durch Polymerisation in der Masse mittels einer Verbindung der Formel (1) zu färben. Hierbei gibt man die Verbindung der Formel (1) entweder selbst oder in Form eines oben erwähnten Master-Batch der Polymerisationsmasse vor oder Während des Polymerisationsvorganges zu, vorzugsweise in Form einer Dispersion in dem Ausgangsglykol, beispielsweise Äthylenglykol. Die Verbindung der Formel (1) löst sich während des Polymerisationsprozesses in dem sich bildenden Polymeren. Diese Verfahrensweise wird analog bekannten Polymerisationsreaktionen durchgeführt, bei welchem ein Farbmittel der Reaktionsmasse zugesetzt wird.

Die nach einem der obigen Verfahrensweisen in der Masse gefärbten Polyester lassen sich anschließend nach üblichen Verfahren verformen und weiterverarbeiten, so beispielsweise im Spritzguß, in Spinnverfahren oder in der Folienherstellung.

Besonder vorteilhaft ist die Verwendung der Verbindung der Formel (1) in Form des Farbstoffkonzentrats (Master-Batch), das also solches oder in geschmolzener Form der Schmelze des zu färbenden Polyesters zugegeben wird. Mit ihm läßt sich die Verbindung der Formel (1) leicht dosieren, und es lassen sich hierdurch in einfacher und genauer Weise bestimmte Farbnuancen und -tiefen einstellen.

Bei der erfindungsgemäßen Verwendung der Verbindungen der Formel (1) können die zu färbenden Polyester auch Mattierungsmittel, wie beispielsweise Titandioxid, enthalten oder solche diesen zugesetzt werden.

Bei der erfindungsgemäßen Färbung der Polyester werden die Verbindungen der Formel (1) naturgemäß in solchen Mengen eingesetzt, die für die gewünschte Farbtiefe erforderlich sind. Im allgemeinen erfolgt in der Praxis die Massefärbung gemäß der vorliegenden Erfindung mit einer Menge von 0,05 bis 3 Gew.-% an der Verbindung der Formel (1), bezogen auf das Gewicht des gefärbten thermoplastischen Materials.

Da die Verbindungen der Formel (1) sich in den Polyestern sowohl in deren geschmolzenem als auch in deren festem Zustand molekulardispers lösen und somit nicht als feste Partikel in der gefärbten Masse enthalten sind, zeigen insbesondere die mit der Verbindung der Formel (1) massegefärbten Fäden eine praktisch unverändert hohe Faserfestigkeit und gute Verstreckbarkeit; insbesondere bei dem Spinnprozess selbst können keine Verstopfungen der Düsen oder Filter und kein Abrieb in den Spinndüsen selbst auftreten. Die Verbindungen der Formel (1) müssen dementsprechend auch vor ihrer Verwendung nicht gesondert dispergiert werden, so daß keine Verarbeitungsschwierigkeiten mit den Verbindungen der Formel (1) auftreten.

Eine besondere Ausgestaltung der vorliegenden Erfindung ist demnach die Verwendung der Verbindungen der Formel (1) in der Spinnfärbung von Polyestern. Analog bekannten Verfahrensweisen kann man hierbei beispielsweise so vorgehen, daß man beim Verspinnen auf Extrusions-Spinnanlagen die Verbindung der Formel (1), beispielsweise über eine Seitenschnecke, vorzugsweise in Form des oben erwähnten Konzentrats in geschmolzenem Zustand, unmittelbar in die Schmelze des Spinnpolymers eindosiert, wobei eine homogene Vermischung unter Lösung der Verbindung der Formel (1) erfolgt (ebenso kann man beim Verspinnen auf Rostspinnanlagen verfahren). Besonders vorteilhaft läßt sich die Färbung der Masse in der Spinnfärbung unter Verwendung des erwähnten Konzentrats (Master-Batches) der Verbindung der Formel (1) durchführen, bei welchem man das Konzentrat in geschmolzenem Zustand der geschmolzenen Masse der Polymeren direkt vor der Spinndüse zugibt. Für die Massefärbung mit den Verbindungen der Formel (1) kann deshalb besonders vorteilhaft in den Spinnverfahren nach dem Injektionsverfahren gearbeitet werden. Durch diese Verfahrensweise lassen sich Verunreinigungen der Spinnanlage durch das Farbmittel vermeiden, und es können nach dieser Verfahrensweise ohne Mühe andere Einfärbungen des zu verspinnenden Polymeren, sei es in Farbton oder Farbtiefe, durch Wechsel der Verbindungen der Formel (1) selbst als Farbmittel bzw. durch Abänderung von deren Dosierungshöhe vorgenommen werden.

Die erfindungsgemäße Verwendung der Verbindungen der Formel (1) führt zu farbstarken brillanten, gelbstichig roten bis braunen Färbungen, die eine sehr gute Licht- und Reibechtheit sowie eine vorzügliche Thermofixierechtheit besitzen. Insbesondere zeigen die Verbindungen der Formel (1) in überraschender Weise eine sehr hohe Löslichkeit in den wasserunlöslichen thermoplastischen Polymerisaten und Polykondensaten von bis zu über 3 Gew.-%, die selbst die bisher in der Technik erwünschten Konzentrationshöchstgrenzen für die praktische Verwendung übertreffen. Insbesondere ist die überraschend hervorragende Thermostabilität der bei der erfindungsgemäßen Verwendung in

der Masse gelöst befindlichen Verbindungen der Formel (1) hervorzuheben, die selbst eine Verarbeitung der gefärbten Masse bei Temperaturen von etwa 300°C ermöglichen: somit eignen sich die Verbindungen der Formel (1) ausgezeichnet für die Technik der Schmelzspinnfärbung. Darüberhinaus zeigen die Verbindungen der Formel (1) bei der erfindungsgemäßen Verwendung auch den Vorteil, daß sie die Viskosität der Spinnschmelzen auch bei farbtiefen Einfärbungen nicht beeinflussen und die Polymerisate und die daraus geformten Gebilde, so auch die Fäden und Fasern, in ihren Eigenschaften, wie beispielsweise Festigkeit und Dehnfähigkeit, nicht vermindern. So ergibt die erfindungsgemäße Verwendung der Verbindungen der Formel (1) in der Massefärbung auch gefärbte Materialien, die in überraschender Weise, insbesondere in Form dünnschichtiger Gebilde, wie Fasern, Fäden, Folien, höchsten Anforderungen an Farbstärke, Licht- und Wetterechtheit und sogar an der ansonten kritischen Thermofixierechtheit genügen; insbesondere ist für die gefärbten Polyester die hohe Thermofixierechtheit trotz der guten Polymerlöslichkeit der Verbindungen der Formel (1) überraschend.

Die nachstehenden Beispiele dienen zur Erläuterung dar Erfindung. Die Teile sind Gewichtsteile, die Angaben in Prozent sind Gewichtsprozente, sofern nicht anders vermerkt.

Beispiel 1

10 Teile der Verbindung der Formel

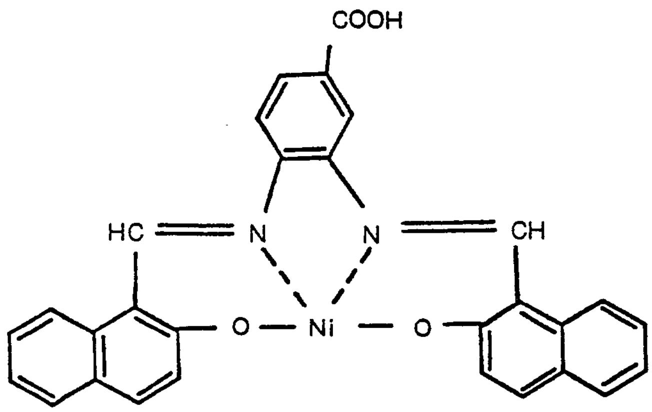

werden mit 90 Teilen Äthylenglykol mittels eines Schnellrührers 30 Minuten lang angeteigt. 5 Teile dieser Paste werden mit 95 Teilen Bis-(β-hydroxyäthyl)-terephthalat vermischt und 6 Stunden lang bei einer Temperatur zwischen 270 und 280°C im Hochvakuum erhitzt, wobei die Kondensation zum Polyester erfolgt. Die so erhaltene gefärbte Schmelze wird abgekühlt und in üblicher Weise granuliert.

Die gefärbte Polyestermasse kann wu geformten Gebilden verschiedenster Art nach den üblichen Verfahren, wie beispielsweise im Spritzguß oder im Schmelzspinnverfahren, weiterverarbeitet werden. Man erhält insbesondere bei der Verarbeitung zu Fäden brillante, gelbstichig rote Färbungen, die eine sehr gute Thermofixier- und Lichtechtheit aufweisen.

Beispiele 2 und 3

Verfährt man wie in Beispiel 1 beschrieben, verwendet jedoch anstelle der dort angegebenen Disazomethinverbindung eine in der nachstehenden Tabelle genannte Disazomethinverbindung entsprechend der allgemeinen Formel (1):

| Bsp. | X | Y | Z |
|---|---|---|---|
| 2 | $-OCH_3$ | $-H$ | $-H$ |
| 3 | $-CH_3$ | $-CH_3$ | $-H$ |

so erhält man ebenfalls braune, farbstarke Fårbungen mit sehr guten Echtheitseigenschaften.

Beispiel 4

1 Teil einer Verbindung entsprechend der allgemeinen Formel (1), in welcher X, Y und Z jeweils eine Carbomethoxygruppe darstellen, wird mit 99 Teilen eines Granulates aus Poly-1,4-dimethylolcyclohexan-terephthalat gemischt und auf eine Temperatur von 270 bis 290°C aufgeschmolzen, wobei sich eine homogene Lösung der Disazomethinverbindung in der Schmelze bildet. Diese gefärbte Schmelze wird analog bekannten und üblichen Verfahrensweisen der Schmelzspinntechnik zu Polyesterfäden versponnen, die eine brillante, gelbstichig rote Nuance zeigen und sich durch eine sehr gute Thermofixier- und Lichtechtheit auszeichnen.

Beispiel 5

Verfährt man wie in Beispiel 4 beschrieben, verwendet jedoch anstelle der dort beschriebenen, verwendet jedoch anstelle der dort beschriebenen Disazomethinverbindung die nachfolgend angegebene Disazomethinverbindung entsprechend der allgemeinen Formel (1):

| X | Y | Z |
|---|---|---|
| $—OC_2H_5$ | —H | $—COOCH_3$ |

so erhält man Fäden in einem lebhaften braunen Farbton mit sehr guten anwendungstechnischen und Echtheitseigenschaften.

Beispiel 6

2,5 Teile einer Präparation von 40 Teilen der Verbindung der allgemeinen Formel (1), in welcher X und Z jeweils für ein Wasserstoffatom stehen und Y die Carbäthoxygruppe bedeutet, und 60 Teilen eines Trägermaterials als Umhüllungspolymer, das beispielsweise ein Poly-$\varepsilon$-caprolacton, Poly-(äthylenglykol-adipat), Poly-(äthylenglykol-sebacat), Poly-(äthylen-glykol-decandicarboxylat), Poly-(cyclo-hexandiol-adipat) oder iso-Phthal- oder Terephthalsäure-copolyester mit Äthylenglykol und Neopentglykol ist, werden mit 97,5 Teilen Poly-äthylenglykolterephthalat gemischt und nach einem für Polyestermaterialien üblichen Schmelzspinnverfahren zu Filamentgarn versponnen. Das so erhaltene Fadenmaterial zeichnet sich durch einen brillanten, gelbstichig Farbton mit ausgezeichneten Echtheitseigenschaften aus.

Das oben verwendete Präparat kann beispielsweise folgendermaßen hergestellt werden: Das Farbmittel und das Trägermaterial werden miteinander vermischt, sodann zusammen aufgeschmolzen, extrudiert, über einen Doppelschneckenextruder ausgetragen und anschließend granuliert.

Beispiele 7 bis 15

Verfährt man wie in einem der obengenannten Beispiele 1, 4 oder 6 beschrieben, verwendet jedoch anstelle der dort beschriebenen Disazomethinverbindung eine in der nachfolgenden Tabelle angegebene Disazomethinverbindung entsprechend der allgemeinen Formel (1), so erhält man eine gefärbte Polymermasse bzw. gefärbte Fäden in den in der Tabelle angegebenen Farbtönen mit ebenso guten anwendungstechnischen Eigenschaften und Echtheiten:

| Bsp. | Z | Y | X | Farbton |
|---|---|---|---|---|
| 7 | —H | —H | $—CH_3$ | gelbstichig rot |
| 8 | —H | —H | $—OC_2H_5$ | blaustichig rot |
| 9 | —H | —H | $—COOC_2H_5$ | scharlach |
| 10 | —COOH | —H | —H | orange |
| 11 | $—COOC_2H_5$ | —H | —COOH | scharlach |
| 12 | —COOH | —H | $—OCH_3$ | rot |
| 13 | —COOH | $—OCH_3$ | $—OCH_3$ | blauchstichig rot |
| 14 | —COOH | —H | $—COOC_2H_5$ | scharlach |
| 15 | $—COOCH_3$ | —H | —H | rotorange |

**Patentansprüche**

1. Verwendung von Disazomethinverbindungen der allgemeinen Formel (1)

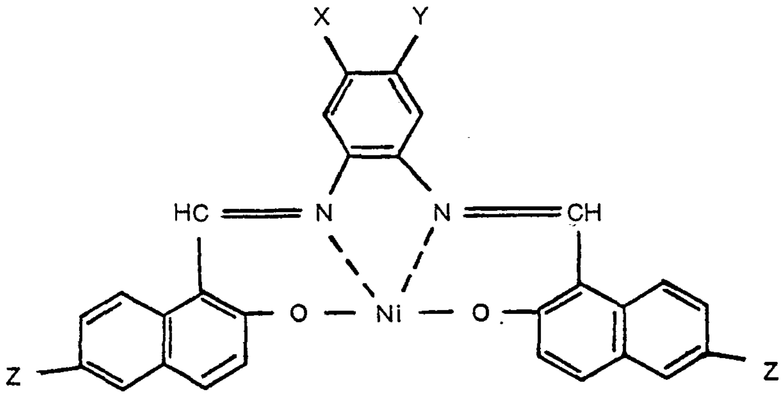

(1)

in welcher X und Y jedes ein Wasserstoffatom, eine Alkylgruppe von 1—4 C-Atomen, eine Alkoxygruppe von 1—4 C-Atomen, eine Carbonsäuregruppe oder eine Carbonsäurealkylestergruppe mit 1—4 C-Atomen im Alkylrest, ist und Z für ein Wasserstoffatom, eine Carbonsäuregruppe oder eine Carbonsäurealkylestergruppe mit 1 bis 4 C-Atomen im Alkylrest steht. wobei X, Y und Z gleich oder verschieden voneinander sein können, jedoch X oder Y oder beide nicht Wasserstoff sind, falls Z Wasserstoff bedeutet, zum Färben von thermoplastischen Polyestern in der Masse.

2. Verwendung der Disazomethinverbindungen gemäß Anspruch 1 in der Spinnfärbung von thermoplastischen Polyestern.

3. Verwendung nach Anspruch 1, dadurch gekennzeichnet, daß die Disazomethinverbindung eine Verbindung der allgemeinen Formel (1) ist.
in welcher X ein Wasserstoffatom, Y die Carboxygruppe und Z jeweils ein Wasserstoffatom bedeuten, oder
in welcher X ein Wasserstoffatom, Y die Methoxygruppe und Z jeweils ein Wasserstoffatom bedeuten, oder
in welcher X ein Wasserstoffatom, Y die Äthoxygruppe und Z jeweils ein Wasserstoffatom bedeuten.

**Revendications**

1. Application de composés disazométhiniques de formule générale (1):

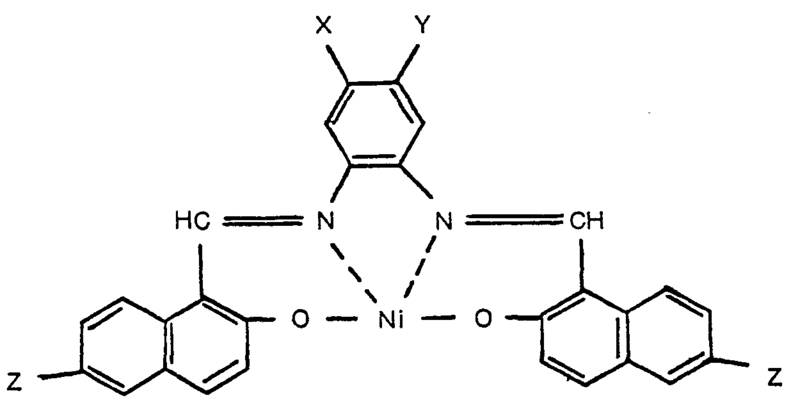

(1)

[dans laquelle X et Y représentent chacun un atome d'hydrogène, un groupe alkyle ayant 1 à 4 atomes de carbone, un groupe alcoxy ayant 1 à 4 atomes de carbone, un groupe acide carboxylique ou un groupe ester alkylique d'acide carboxylique ayant 1 à 4 atomes de carbone dans le radical alkyle, et Z représente un atome d'hydrogène, un groupe acide carboxylique ou un groupe ester alkylique d'acide carboxylique ayant 1 à 4 atomes de carbone dans le radical alkyle, les symboles X, Y et Z pouvant être identiques ou différents, mais X ou Y, ou les deux, ne pouvant pas représenter de l'hydrogène lorsque Z represente de l'hydrogène] à la teinture, dans la masse, de polyesters thermoplastiques.

2. Application de composés disazométhiniques selon la revendication 1 à la teinture en cours de filage de polyesters thermoplastiques.

3. Application selon la revendication 1, caractérisée en ce que le composé disazométhinique est un composé de formule générale (1),
dans laquelle X représente un atome d'hydrogène, Y le groupe carboxyle et chaque Z est un atome d'hydrogène, ou

dans laquelle X est un atome d'hydrogène, Y représente le groupe méthoxy et chaque Z est un atome d'hydrogène, ou
dans laquelle X est un atome d'hydrogène, Y représente le groupe éthoxy et chaque Z est un atome d'hydrogène.

**Claims**

1. Use of disazomethine compounds of the general formula (1)

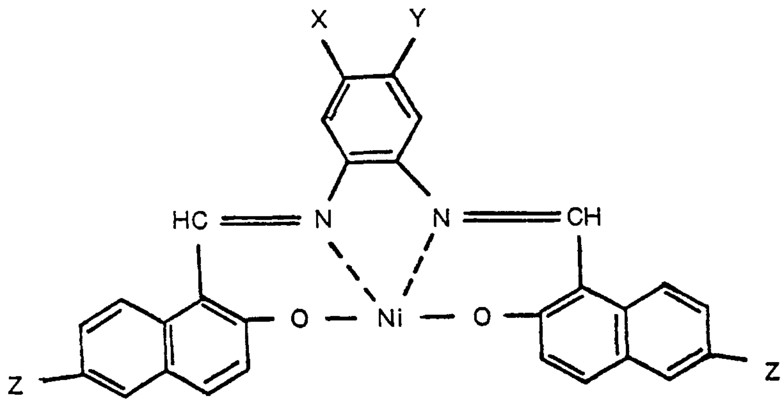

(1)

in which X, Y and Z are identical to or different from each other, and X and Y each is a hydrogen atom, an alkyl group of 1 to 4 C-atoms, a carboxylic acid group or a carboxylic acid alkyl ester group having 1 to 4 C-Atoms in the alkyl moiety, and Z represents a hydrogen atom, a carboxylic acid group or a carboxylic acid alkyl ester group having 1 to 4 C-atoms in the alkyl moiety, however, X or Y or both are not hydrogen if Z means hydrogen, for colouring in the mass thermoplastic polyesters.

2. Us of the disazomethine compounds according to claim 1 in the spin-dyeing thermoplastic polyesters.

3. Use according to claim 1 characterized by that the disazomethin compound is a compound of the general formula (1), in which X means a hydrogen atom, Y means the carboxylic acid group and Z each means a hydrogen atom, or in which X means a hydrogen atom, Y means the methoxy group and Z each means a hydrogen atom, or
in which X means a hydrogen atom, Y means the ethoxy group and Z each means a hydrogen atom.